# EUROPÄISCHE PATENTANMELDUNG

(11) **EP 4 535 586 A1**
(43) Veröffentlichungstag der Anmeldung: **09.04.2025**
(21) Anmeldenummer: 24203651.5
(22) Anmeldetag: 30.09.2024
(51) Int. Cl.: H02G 3/10, H02G 3/12

(54) **MODULARES AUFPUTZ-SYSTEM FÜR WANDFLÄCHEN**

(30) Priorität: 06.10.2023 DE 102023127327
(71) Anmelder: ABB SCHWEIZ AG, 5400 Baden (CH)
(72) Erfinder: WEHBERG, Tim, 58509 Lüdenscheid (DE); SCHWEDT, Alexander, 58515 Lüdenscheid (DE); THINIUS, Doerte, 42349 Wuppertal (DE); RITTINGHAUS, Hanna, 58553 Halver (DE)
(74) Vertreter: Zimmermann & Partner Patentanwälte mbB

(57) **Zusammenfassung**

Die vorliegende Offenbarung stellt eine Modulares Aufputz-System (100) bereit, wobei das Modulare Aufputz-System umfasst: ein Basismodul (20) zum Anbringen an einer Wandfläche (10), wobei das Basismodul (20) eine Stromversorgungseinheit (27) und mindestens eine Basis-Modulschnittstelle (25) aufweist; mindestens ein Erweiterungsmodul (50), wobei das Erweiterungsmodul (50) mindestens eine Erweiterungs-Modulschnittstelle (55) und eine Nutzerfunktionseinheit (80) aufweist; wobei das Erweiterungsmodul (50) über die Erweiterungs-Modulschnittstelle (55) an der Basis-Modulschnittstelle (25) des Basismoduls (20) zur Befestigung des Erweiterungsmoduls (50) an dem Basismodul (20) und zum Ausbilden einer elektrischen Verbindung zwischen dem Basismodul (20) und dem Erweiterungsmodul (50) anschließbar ist; und wobei das Erweiterungsmodul (50) im angeschlossenen Zustand an der Wandfläche (10) an dem Basismodul (20) anliegend angeordnet ist, und die Nutzerfunktionseinheit (80) des Erweiterungsmoduls mit dem Basismodul (20) elektrisch verbunden ist.

## Beschreibung

### Technisches Gebiet

Die Erfindung bezieht sich auf das Gebiet der Aufputz-Installationssysteme. Insbesondere betrifft die Erfindung ein modulares Aufputz-System.

### Technischer Hintergrund

Aufputz-Verlegung ist eine übliche Methode von Elektro-Installationssystemen. Diese Installationsart wird üblicherweise in Garagen, Kellern, Dachböden oder in Werkstätten eingesetzt. Sie kann nachträglich einfach geändert oder erweitert werden.

In der Regel hat jedes konventionelle Elektrogerät eine Aufputz- und eine Unterputzeinheit. Um diese vorschriftsmäßig installieren zu können, müssen die Wände mit Unterputzdosen und Kabelkanälen versehen werden. Für die Installation konventioneller Geräte beim Endverbraucher ist ein Elektriker erforderlich, was für ihn einen hohen Zeit- und Kostenaufwand bedeutet. In der Anwendung hat der Endnutzer wenig Freiheitsgrad bei der Nutzung konventioneller Geräte, wobei Funktionen durch das Gerät vorgegeben sind. Auch beim Austausch von Geräten, z.B. bei einer Renovierung, sind die Möglichkeiten zur Anpassung/Erweiterung von Funktionen oder zum Rückbau einer Installation durch die vorhandene Verkabelungssituation und den Zustand der Wände begrenzt.

### Zusammenfassung der Erfindung

Es kann als Aufgabe der Erfindung angesehen werden, ein Nutzerfunktionssystem bereitzustellen, dass auf einfache Weise an einer Wandfläche installiert und mit Strom versorgt werden kann.

Gemäß einem ersten Aspekt der vorliegenden Erfindung, wird ein modulares Aufputz-System angegeben, umfassend ein Basismodul zum Anbringen an einer Wandfläche, wobei das Basismodul eine Stromversorgungseinheit und mindestens eine Basis-Modulschnittstelle aufweist; mindestens ein Erweiterungsmodul, wobei das Erweiterungsmodul mindestens eine Erweiterungs-Modulschnittstelle und eine Nutzerfunktionseinheit aufweist; wobei das Erweiterungsmodul über die Erweiterungs-Modulschnittstelle an der Basis-Modulschnittstelle des Basismoduls zur Befestigung des Erweiterungsmoduls an dem Basismodul und zum Ausbilden einer elektrischen Verbindung zwischen dem Basismodul und dem Erweiterungsmodul anschließbar ist; und wobei das Erweiterungsmodul im angeschlossenen Zustand an der Wandfläche an dem Basismodul anliegend angeordnet ist, und die Nutzerfunktionseinheit des Erweiterungsmoduls mit dem Basismodul elektrisch verbunden ist.

Gemäß einem zweiten Aspekt der vorliegenden Erfindung wird ein Basismodul zur Verwendung in einem modularen Aufputz-System angegeben, wobei das Basismodul eine Stromversorgungseinheit und mindestens eine Basis-Modulschnittstelle aufweist.

Gemäß einem dritten Aspekt der vorliegenden Erfindung wird ein Erweiterungsmodul zur Verwendung in einem modularen Aufputz-System angegeben, wobei das Erweiterungsmodul eine Erweiterungs-Modulschnittstelle, die an einer Basis-Modulschnittstelle eines Basismoduls zur Befestigung des Erweiterungsmoduls an dem Basismodul und zum Ausbilden einer elektrischen Verbindung zwischen dem Basismodul und dem Erweiterungsmodul anschließbar ist, umfasst.

Gemäß einem vierten Aspekt der vorliegenden Erfindung wird ein Verfahren zum Betreiben eines modularen Aufputz-System angegeben, wobei das Verfahren das Anbringen des Basismodul an einer Wandfläche, das Befestigen des Erweiterungsmodul über die mindestens eine Erweiterungs-Modulschnittstelle an der Basis-Modulschnittstelle des Basismoduls, das elektrische Verbinden der Nutzerfunktionseinheit des mindestens einen Erweiterungsmoduls mit dem Basismodul, und das Versorgen der Nutzerfunktionseinheit mit Strom über die Stromversorgungseinheit des Basismoduls umfasst.

Aspekte, Vorteile und Merkmale der vorliegenden Erfindung sind in den Ansprüchen, der Beschreibung sowie in den beiliegenden Zeichnungen offenkundig.

### Kurze Beschreibung der Figuren

Fig. 1 zeigt eine schematische Ansicht eines Modularen Aufputz-System mit dem Basis Modul und einem Erweiterungsmodul;
Fig. 2 zeigt eine schematische Ansicht einer weiteren Ausführungsform des modularen Aufputz-Systems mit zwei Erweiterungsmodulen unterschiedlicher Größe;
Fig. 3 zeigt eine schematische Frontansicht einer weiteren Ausführungsform des modularen Aufputz-System mit fünf Erweiterungsmodulen;
Fig. 4 zeigt eine schematische Frontansicht einer weiteren Ausführungsform des modularen Aufputz-Systems mit fünf Erweiterungsmodulen unterschiedlicher Größe;
Fig. 5 zeigt eine schematische Frontansicht einer weiteren Ausführungsform des modularen Aufputz-Systems 100 mit fünf Erweiterungsmodulen unterschiedlicher Größe;
Fig. 6A zeigt eine weitere Ausführungsform des modularen Aufputz-Systems 100 mit einer Vielzahl von Erweiterungsmodulen unterschiedlicher Größe, das an einer Wandfläche angeordnet;
Fig. 6B zeigt die gleiche Ausführungsform des modularen Aufputz-Systems wie in Fig. 6A aus einer seitlichen Perspektive;
Fig. 7 zeigt eine weitere Ausführungsform des modularen Aufputz-Systems in einer schematischen Explosionsansicht;
Fig. 8A zeigt eine schematische Rückansicht einer weiteren Ausführungsform des modularen Aufputz-Systems;
Fig. 8B zeigt eine schematische Rückansicht einer weiteren Ausführungsform des modularen Aufputz-Systems;
Fig. 9 zeigt eine schematische Rückansicht einer weiteren Ausführungsform eines Basismoduls des modularen Aufputz-Systems.

### Detaillierte Beschreibung der Ausführungsformen

Es soll nun auf verschiedene Ausführungsformen der Offenbarung Bezug genommen werden. Innerhalb der folgenden Beschreibung der Figuren beziehen sich gleiche Bezugszeichen auf gleiche Komponenten. Normalerweise werden nur die Unterschiede in Bezug auf einzelne Ausführungsformen beschrieben. Jedes Beispiel ist durch Erklärung der Offenbarung bereitgestellt und ist nicht als Einschränkung zu verstehen. Ferner können dargestellte oder beschriebene Merkmale als Teil einer Ausführungsform auch in Verbindung mit anderen Ausführungsformen verwendet werden um weitere Ausführungsformen zu erhalten. Es ist beabsichtigt, dass die Beschreibung solche Modifikationen und Variationen einschließt.

Der Begriff Aufputz-System bezieht sich auf ein System, das sichtbar auf dem Putz also auf der Oberfläche von Wänden angeordnet bzw. installiert werden kann.

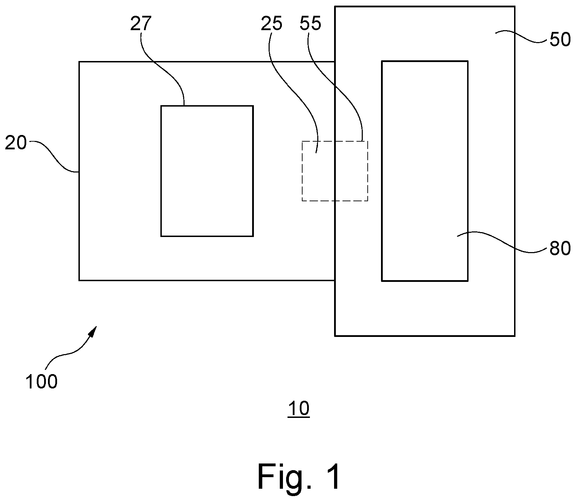

In Bezug auf die beispielhaften Ausführungsformen, die in den Figuren 1 bis 9 gezeigt sind, soll die vorliegende Offenbarung näher erläutert werden. Das hier beschriebene modulare Aufputz-System lässt sich mit weiteren hierhin beschrieben Ausführungsformen kombinieren. Das modulare Aufputz-System 100 umfasst ein Basismodul 20 zum Anbringen an einer Wandfläche 10, wobei das Basismodul 20 eine Stromversorgungseinheit 27 und mindestens eine Basis-Modulschnittstelle 25 aufweist. Das Modulare Aufputz-System 100 umfasst ferner mindestens ein Erweiterungsmodul 50, wobei das Erweiterungsmodul 50 mindestens eine Erweiterungs-Modulschnittstelle 55 und eine Nutzerfunktionseinheit 80 aufweist. Das Erweiterungsmodul 50 ist über die Erweiterungs-Modulschnittstelle 55 an der Basis-Modulschnittstelle 25 des Basismoduls 20 zur Befestigung des Erweiterungsmoduls 50 an dem Basismodul 20 und zum Ausbilden einer elektrischen Verbindung zwischen dem Basismodul 20 und dem Erweiterungsmodul 50 anschließbar. Im angeschlossenen Zustand ist das Erweiterungsmodul 50 an der Wandfläche 10 an dem Basismodul 20 anliegend angeordnet, und die Nutzerfunktionseinheit 80 des Erweiterungsmoduls 50 ist mit dem Basismodul 20 elektrisch verbunden.

Das erfindungsgemäße Aufputz-System hat den Vorteil, dass sich eine Nutzerfunktionseinheit über das Erweiterungsmodul einfach und schnell an einer Wandfläche montieren und mit Strom versorgen lässt. Ferner kann dadurch die Position der Nutzerfunktionseinheit an der Wandfläche durch die verschiedenen Installationsmöglichkeiten des Erweiterungsmoduls an dem Basismodul den Wünschen des Nutzers angepasst werden.

Das Basismodul kann als ein Startmodul verstanden werden, das an einer Wandfläche angebracht werden kann. Das Basismodul kann z.B. über eine Schraubverbindung, über eine Steckverbindung oder durch Klebemittel an der Wandfläche befestigt werden. Das Basismodul kann z.B. auf der Wandfläche aufliegend bzw. eng an der Wandfläche aufliegend angeordnet sein, wodurch der Halt des Basismoduls an der Wandfläche verbessert wird.

Der Begriff Wandfläche umfasst z.B. allerlei Oberflächen, die sich innerhalb oder an den nach Außen gerichteten Seiten z.B. von Gebäuden, Räumen, Hallen, Einrichtungen, oder Ähnlichem befinden. Die Wandfläche kann z.B. als eine Seitenwand, ein Deckenwand oder als Bodenfläche eines Raumes verstanden werden. Vorzugsweise ist die Wandfläche gerade und eben ausgebildet. Insbesondere, kann die Wandfläche als eine Seitenwand-Wandfläche verstanden werden.

Die Stromversorgungseinheit ist dazu ausgebildet das Basismodul mit elektrischer Energie bzw. mit Strom zu versorgen. Damit kann die Basis-Modulschnittstelle des Basismoduls mit elektrischer Energie versorgt bzw. unter Strom gesetzt werden. In einer Ausführungsform, die mit anderen Ausführungsformen, die hier beschrieben sind, kombiniert werden kann, ist die Stromversorgungseinheit konfiguriert selbständig bzw. autonom elektrische Energie zu erzeugen. Dafür kann die Stromerzeugungseinheit z.B. eine Photovoltaikbaugruppe, Solarzellen oder thermoelektrische Generatoren aufweisen. Ferner kann die Stromerzeugungseinheit auch mechanische Schaltmittel aufweisen, die durch mechanische Krafteinsatz, z.B. von Personen, elektrische Energie erzeugen können. Das hat den Vorteil, dass das Basismodul unabhängig von externen Stromanschlüssen an der Wandfläche montiert werden kann wodurch die Einsatzmöglichkeiten des Modularen Aufputz-Systems erweitert werden.

In einer Ausführungsform, die mit anderen Ausführungsformen, die hier beschrieben sind, kombiniert werden kann, ist die Stromversorgungseinheit an ein externes Stromnetz anschließbar und kann über das externe Stromnetz mit elektrischer Energie versorgt werden.

Die Basis-Modulschnittstelle ist dazu ausgebildet, dass sie an eine Erweiterungs-Modulschnittstelle eines Erweiterungsmoduls angeschlossen werden kann, um das Erweiterungsmodul an das Basismodul zu befestigen und eine elektrische Verbindung zwischen dem Basismodul und dem Erweiterungsmodul herzustellen. Die Basis-Modulschnittstelle kann z.B. mittles Steckmitteln, Steckverbindung oder über Klebemittel an eine Erweiterungs-Modulschnittstelle befestigt werden.

In einer Ausführungsform, die mit anderen Ausführungsformen, die hier beschrieben sind, kombiniert werden kann, ist die Basis-Modulschnittstelle baugleich mit der Erweiterungs-Modulschnittstelle. In anderen Worten, die Basis-Modulschnittstelle und die Erweiterungs-Modulschnittstelle kann die gleiche technische Bauweise aufweisen. Das hat den Vorteil, dass das Anschließen vereinfacht wird.

Als Nutzerfunktionseinheit können allerlei mögliche elektrische Komponenten verstanden werden, die eine technische Funktion erfüllen und/oder mit einer Person interagieren können. Eine Nutzerfunktionseinheit kann zum Beispiel mindestens eine der folgende Komponenten umfassen: USB-Ladegerät, Datenkommunikationsmittel wie z.B. Antennen, UAE, HDMI, Klingeln, Karten-Schalter, Multimedia-Anschlüsse, Bedienungselemente, Beleuchtungselemente, wie z-B. Infolichter und Leuchtschilder, Beleuchtungssteuerungselemente, wie z.B. Dimmer, Schalter, Taster, Funk& Fernsteuerung, wie z.B. NFC und Bluetooth, Radio, Multimedia Steuerung, Lautsprecher, Zeitschaltuhren, Raumsensor, Raumtemperaturregler, Bewegungsmelder, Präsenzmelder, Kamera, Rauchmelder, CO-Melder, Wärmealarm, Smart-Home Steuerung, KNX, Türöffnungssystem, Türsprechanlage und Displays. Die Nutzerfunktionseinheit kann dabei in dem Erweiterungsmodul integriert sein oder auf dem Erweiterungsmodul angeordnet sein. In einer Ausführungsform, die mit anderen Ausführungsformen, die hier beschrieben sind, kombiniert werden kann, weist ein Erweiterungsmodul mehrere Nutzerfunktionseinheiten auf.

Im angeschlossenen Zustand ist das mindestens eine Erweiterungsmodul an dem Basismodul angeschlossen, wobei eine elektrische Verbindung zwischen dem Basismodul und dem daran angeschlossenen Erweiterungsmodul über die jeweiligen Modulschnittstellen besteht. Dadurch können elektrische Signale zwischen dem Basismodul und dem daran angeschlossenen Erweiterungsmodul ausgetauscht werden. Ferner kann das Erweiterungsmodul über das Basismodul im angeschlossenen Zustand mit Stromversorgt werden. Anliegend angeordnet kann dabei zum Beispiel so verstanden werden, dass sich das Basismodul und das daran angeschlossene Erweiterungsmodul berühren. Ferner kann der Abstand zwischen dem Basismodul und dem daran angeschlossenen Erweiterungsmodul weniger als 1cm, vorzugsweise weniger als 5mm, oder noch bevorzugter weniger als 1mm betragen. Im angeschlossenen Zustand ist das mindestens eine Erweiterungsmodul neben dem Basismodul an der Wandfläche angeordnet.

In einer Ausführungsform, die mit anderen Ausführungsformen, die hier beschrieben sind, kombiniert werden kann, ist die Verbindung zwischen der Basis-Modulschnittstelle und der Erweiterungs-Modulschnittstelle lösbar ausgebildet. Dadurch kann der angeschlossene Zustand wieder auf einfache Weise aufgehoben werden. Das hat den Vorteil, dass das modulare Aufputz-System wieder einfach abgebaut werden kann oder das mindestens eine Erweiterungsmodul wieder umgesteckt bzw. ausgetauscht werden kann.

In einer Ausführungsform, die mit anderen Ausführungsformen, die hier beschrieben sind, kombiniert werden kann, ist das Erweiterungsmodul jeweils an ein weiteres Erweiterungsmodul über ihre jeweiligen Erweiterungs-Modulschnittstellen zur Befestigung des Erweiterungsmoduls an dem weiteren Erweiterungsmodul und zum Ausbilden einer elektrischen Verbindung zwischen den Erweiterungsmodulen aneinander anschließbar, und wobei im angeschlossenen Zustand das Erweiterungsmodul auf der Wandfläche an dem weiteren Erweiterungsmodul anliegend angeordnet ist, und die Nutzerfunktionseinheiten der Erweiterungsmodule mit dem Basismodul elektrisch verbunden sind. In dieser Ausführungsform sind im angeschlossenen Zustand mindestens zwei Erweiterungsmodule aneinander angeschlossen, wobei eine elektrische Verbindung zwischen den beiden aneinander angeschlossenen Erweiterungsmodulen besteht, und dadurch ist auch das weitere Erweiterungsmodul über die jeweiligen Erweiterungsmodulschnittstellen mit dem Basismodul elektrisch verbunden.

Dadurch kann auf einfache Weise eine Vielzahl von Erweiterungsmodulen im angeschlossenen Zustand über das Basismodul mit Strom versorgt werden. Ferner können im angeschlossenen Zustand elektrische Signale zwischen den Erweiterungsmodulen untereinander und auch zwischen dem Basismodul ausgetauscht werden. Anliegend angeordnet kann dabei, zum Beispiel, so verstanden werden, dass sich das Erweiterungsmodul und das daran angeschlossene weitere Erweiterungsmodul berühren. Ferner kann der Abstand zwischen dem Erweiterungsmodul und dem daran angeschlossenen weiteren Erweiterungsmodul weniger als 1cm, vorzugsweise weniger als 5mm, oder noch bevorzugter weniger als 1mm betragen. Im angeschlossenen Zustand ist das mindestens eine weitere Erweiterungsmodul neben dem Erweiterungsmodul an der Wandfläche angeordnet.

In einer Ausführungsform, die mit anderen Ausführungsformen, die hier beschrieben sind, kombiniert werden kann, weist das Basismodul eine Nutzerfunktionseinheit auf. Dadurch können die Einsatzmöglichkeiten des modularen Aufputz-Systems erhöht werden. Ferner kann das Basismodul auch mehrere Nutzerfunktionseinheiten aufweisen. Die Nutzerfunktionseinheit des Basismoduls kann z. B. ein Steuerelement umfassen, über welches eine andere Nutzerfunktionseinheit eines Erweiterungsmoduls steuerbar ist.

In einer Ausführungsform, die mit anderen Ausführungsformen, die hier beschrieben sind, kombiniert werden kann, weisen die Erweiterungs-Modulschnittstellen Einrastelemente auf. Durch Einrastelemente können die Erweiterungs-Modulschnittstellen auf einfache Weise miteinander verbunden werden. Die Einrastelemente können z.B. Koppelemente, Klickelemente, ineinandergreifende Schienen oder einrastbare Steckelemente umfassen, die z.B. durch mechanische Krafteinwirkung aneinandergekoppelt werden. Weiterhin können die Einrastelemente mittels Presspassung oder Formschluss Kraftwirkung entfalten. Ferner können auch die Basis-Modulschnittstellen Einrastelemente aufweisen. Die Einrastelemente können dabei so ausgebildet sein, dass sie wieder voneinander durch mechanische Krafteinwirkung gelöst werden können.

In einer Ausführungsform, die mit anderen Ausführungsformen, die hier beschrieben sind, kombiniert werden kann, weisen die Erweiterungs-Modulschnittstellen Magnetelemente auf. Die Magnetelemente ermöglichen es die Erweiterungs-Modulschnittstellen auch über Magnetkraft aneinander zu befestigen. Ferner können auch die Basis-Modulschnittstellen Magnetelemente aufweisen. Die Magnetelemente können z.B. Permanentmagnete aufweisen.

In einer Ausführungsform, die mit anderen Ausführungsformen, die hier beschrieben sind, kombiniert werden kann, ist das mindestens eine Erweiterungsmodul an der Wandfläche befestigbar. Dadurch kann die Stabilität des modularen Aufputz-Systems im angeschlossenen Zustand insgesamt verbessert werden, da auch das mindestens eine Erweiterungsmodul an der Wand gehalten wird. Das mindestens eine Erweiterungsmodul kann z.B. an der Wand angeklebt, angeschraubt oder durch sonstige Haftmittel an der Wandfläche angebracht sein.

In einer Ausführungsform, die mit anderen Ausführungsformen, die hier beschrieben sind, kombiniert werden kann, ist das Erweiterungs-Modul im angeschlossenen Zustand auf der Wandfläche aufliegend bzw. eng an der Wandfläche aufliegend angeordnet, wodurch der Halt des Erweiterungs-Moduls an der Wandfläche verbessert wird.

In einer Ausführungsform, die mit anderen Ausführungsformen, die hier beschrieben sind, kombiniert werden kann, ist das Basismodul an einer Unterdose an der Wandfläche montierbar, und die Stromversorgungseinheit mit der Unterdose elektrisch verbindbar. Eine Unterdose kann auch als Unterputzdose verstanden werden, die in der Wand, die die Wandfläche ausbildet, versenkt ist. Das Basismodul kann über der Unterdose montiert werden, wobei die Unterdose von dem Basismodul vollständig bedeckt wird. Das Basismodul kann ferner an der Unterdose befestigt sein. Das Basismodul kann auch an einem Steckdoseneinsatz, der in der Unterdose versenkt ist, montierbar ausgebildet sein. Das Basismodul kann dabei anstelle einer Steckdose direkt auf der Unterputzdose montierbar ausgebildet sein. Insbesondere kann das Basismodul anstelle eines Steckdosenrahmens auf der Unterputzdose montierbar ausgebildet werden. Durch die Montage des Basismoduls an einer Unterdose kann eine einfache und sichere Montage des Basismodul an der Wandfläche ermöglich werden. Ferner kann dadurch auch erreicht werden, dass das Basismodul im angeschlossenen Zustand direkt auf der Wandfläche aufliegt. Somit kann auch erreicht werden, dass das Basismoduls spaltfrei an der Wandfläche aufliegt. Die Stromversorgungseinheit des Basismodul kann auch über einen Steckdoseneinsatz mit der Unterdose elektrisch verbunden werden.

In einer Ausführungsform, die mit anderen Ausführungsformen, die hier beschrieben sind, kombiniert werden kann, weist die Stromversorgungseinheit einen Transformator bzw. Spanungswandler oder Netzadapter auf, der die Netzspannung runter regelt. Vorzugsweise wird die Netzspannung von 230 Volt auf weniger als 25 Volt, weiter bevorzugt auf 5 bis 20 Volt, noch weiter bevorzugt auf ca. 5 Volt transformiert. Die niedrigere Spannung hat den Vorteil, dass sie die Sicherheit für Monteure und Nutzer des Modularen Aufputz-System erhöht. Ferner ist die Installation des modularen Aufputz-Systems auch von fachfremden Personen ohne entsprechende Qualifikation möglich.

In einer Ausführungsform, die mit anderen Ausführungsformen, die hier beschrieben sind, kombiniert werden kann, ist die Stromversorgungseinheit über ein Stromkabel elektrisch verbindbar ist. Die elektrische Stromversorgung über ein Stromkabel erweitert die Einsatzmöglichkeiten des modularen Aufputz-Systems, da die Montage des Basismoduls an der Wandfläche mehr Installationsfreiheiten zulässt. Das Stromkabel kann ein USB Kabel, bzw. ein USB Stecksystem umfassen. Vorzugsweise ist das Stromkabel als ein USB-C Kabel bzw. USB-C Stecksystem ausgebildet. Durch die Anschlussmöglichkeit der Stromversorgungseinheit über ein Stromkabel ist die Installation des Basismodul insbesondere in der Nähe von an der Wandfläche vorhandenen Steckdosen vereinfacht.

In einer Ausführungsform, die mit anderen Ausführungsformen, die hier beschrieben sind, kombiniert werden kann, ist das Basismodul auf der Wandfläche an einer Steckdose anliegend angeordnet. Das Basismodul kann z.B. an einem dafür geeigneten Steckdosenrahmen der Steckdose befestigbar ausgebildet sein. Dadurch kann die Befestigung des Basismodul an der Wandfläche verbessert werden. Ferner könnte auch auf weitere Befestigungsmittel zwischen dem Basismodul und der Wandfläche verzichtet werden. Ferner kann dadurch auch ein Stromanschluss zwischen der Steckdose und der Stromversorgungseinheit des Basismodul durch die kurze Entfernung z.B. über ein Stromkabel vereinfacht werden.

In einer Ausführungsform, die mit anderen Ausführungsformen, die hier beschrieben sind, kombiniert werden kann, weist das Basismodul und das mindestens eine Erweiterungsmodul jeweils eine Außenkante auf, die gerade verläuft. Das Erweiterungsmodul kann dadurch eng-anliegend an das Basismodul auf der Wandfläche angeordnet werden. Dabei kann im angeschlossenen Zustand die gerade verlaufenden Außenkanten des Basismoduls an die gerade verlaufende Außenkante eines Erweiterungsmoduls angelegt werden. Dadurch kann der Anschluss der Basis-Modulschnittstelle and die Erweiterungs-Modulschnittstelle vereinfacht werden. Ferner kann eine verbesserte Orientierung des Basismodul zu dem Erweiterungsmodul erreicht werden, was die Ausrichtung und Bedienbarkeit der Nutzerfunktionseinheit des Erweiterungsmoduls verbessert. Gemäß einer Ausführungsform, die mit anderen Ausführungsformen, die hier beschrieben sind, kombiniert werden kann, ermöglichen die gerade verlaufenden Außenkanten auch einen vereinfachten Anschluss zwischen der Erweiterungs-Modulschnittstelle des Erweiterungsmoduls und einer weiteren Erweiterungs-Modulschnittstelle eines weiteren Erweiterungsmoduls. Über die gerade verlaufenden Außenkanten der jeweiligen Erweiterungsmodule kann auch eine Vielzahl von Erweiterungsmodulen in gleicher Orientierung zueinander an der Wandfläche angeordnet werden, wobei die jeweiligen geraden Außenkanten im angeschlossenen Zustand im Wesentlichen parallel zueinander ausgerichtet sind.

In einer Ausführungsform, die mit anderen Ausführungsformen, die hier beschrieben sind, kombiniert werden kann, ist das mindestens eine Erweiterungsmodul rechteckförmig ausgebildet. In anderen Worten weist das mindestens eine Erweiterungsmodul eine erste gerade verlaufende Außenkante und eine zweite gerade verlaufende Außenkante auf. Der Begriff "rechteckförmig ausgebildet" kann dabei auch so verstanden werden, dass das Erweiterungsmodul quaderförmig ausgebildet ist, wobei das Erweiterungsmodul an der Wandfläche in der Draufsicht auf die Wandfläche eine rechteckige Form aufweist. Die rechteckige Form der Erweiterungsmodule erleichtert den Anschluss der Erweiterungsmodul-Schnittstellen an die Basis-Modulschnittstellen. Ferner kann das Erweiterungsmodul auch verschiedene Größen aufweisen, die jeweils zueinander im Größenverhältnis 2:1 stehen. Das Erweiterungsmodul kann zum Beispiel als Mini-Erweiterungsmodul oder als Medium-Erweiterungsmoduls ausgebildet sein, wobei das Mini-Erweiterungsmodul eine quadratische Form aufweist und halb so lang ist wie das Medium-Erweiterungsmodul. In anderen Worten, das Mini-Erweiterungsmodul kann halb so groß sein wie das Medium-Erweiterungsmodul. Ferner kann das Erweiterungsmodul auch als ein Standart-Erweiterungsmodul ausgebildet sein, das eine quadratische Form hat und doppelt so groß ist wie das Medium-Erweiterungsmodul, bzw. viermal so groß ist wie das Mini-Erweiterungsmodul. In einer Ausführungsform die mit anderen Ausführungsformen, die hier beschrieben sind, kombiniert werden kann, weist das mindestens eine Erweiterungsmodul im Wesentlichen die gleiche Höhe, bzw. Dicke auf wie das Basismodul. Damit kann das Aufputz-System als eine gleichmäßige Funktionsfläche erscheinen, auf der die Nutzerfunktionseinheit gut sichtbar und zugänglich für den Nutzer auf einer Ebene angeordnet sind. Ferner kann auch eine Vielzahl von Erweiterungsmodulen vorgesehen sein, die alle im Wesentlichen die gleiche Dicke, bzw. Höhe aufweisen, wodurch der Effekt einer gemeinsamen gleichmäßigen Funktionsfläche für die die Nutzerfunktionseinheiten noch verstärkt wird.

In einer Ausführungsform, die mit anderen Ausführungsformen, die hier beschrieben sind, kombiniert werden kann, ist die Außenkante des mindestens einen Erweiterungsmoduls im angeschlossenen Zustand an der Wandfläche im Wesentlichen parallel zu der Außenkante des Basismoduls ausgerichtet ist. Die Außenkante des Basismoduls und die Außenkante des mindestens einen Erweiterungsmoduls können z. B. an der Wandfläche waagrecht oder senkrecht ausgerichtet sein. Dadurch kann z. B, eine symmetrische Anordnung des Erweiterungsmodul an der Wandfläche erreicht werden. In einer Ausführungsform, die mit anderen Ausführungsformen, die hier beschrieben sind, kombiniert werden kann, sind die Außenkanten einer Vielzahl von Erweiterungsmodulen alle im Wesentlichen parallel zu der Außenkante des Basismodul ausgerichtet. Dadurch kann die Vielzahl von Erweiterungsmodulen symmetrisch zueinander an der Wandfläche angeordnet werden.

In einer Ausführungsform, die mit anderen Ausführungsformen, die hier beschrieben sind, kombiniert werden kann, ist ein Abdeckrahmen vorgesehen, der konfiguriert ist, das Basismodul und das mindestens eine Erweiterungsmodul im angeschlossenen Zustand an der Wandfläche zu umschließen. Durch den Abdeckrahmen kann die Befestigung der Erweiterungsmodule an das Basismodul verbessert werden, was die Stabilität des modularen Aufputz-Systems im angeschlossenen Zustand erhöht. Der Abdeckrahmen kann ferner auch zusätzlich selbst an der Wandfläche befestigt sein, wodurch der Halt des modularen Aufputz-Systems verbessert wird. Ferner kann der Abdeckrahmen konfiguriert sein auch den Zwischenraum zwischen dem Basismodul und dem mindestens einen Erweiterungsmodul abzudecken. Der Abdeckrahmen kann z.B. auf das an der Wandfläche montierte modulare Aufputz-System aufgelegt, bzw. aufgebracht werden. Gemäß einer Ausführungsform, die mit anderen Ausführungsformen, die hier beschrieben sind, kombiniert werden kann, ist der Abdeckrahmen konfiguriert das Basismodul und eine Vielzahl von Erweiterungsmodulen im angeschlossenen Zustand an der Wandfläche zu umschließen.

In einer Ausführungsform, die mit anderen Ausführungsformen, die hier beschrieben sind, kombiniert werden kann, weist ein Erweiterungsmodul des mindestens einen Erweiterungsmoduls eine Ausnehmung auf, die konfiguriert ist, das Basismodul aufzunehmen und im angeschlossenen Zustand an der Wandfläche zu umschließen. Die Ausnehmung kann als ein Hohlraum verstanden werden, der groß genug ist, das Basismodul aufzunehmen bzw. zu umfassen, sodass das Basismodul innerhalb der Aufnahme platziert werden kann. Ein Erweiterungsmodul mit Aufnahme kann z.B. als rahmenartige Struktur verstanden werden, die einen Hohlraum ausbildet. Das Erweiterungsmodul kann alle mögliche Umfangformen haben, wie z.B. kreisförmig, ringförmig, ellipsenförmig, vieleckig, rechteckig oder quadratisch. Ferner kann ein weiteres Erweiterungsmodul mit einer weiteren Ausnehmung vorgesehen sein, das konfiguriert ist, das erste Erweiterungsmodul mit Ausnehmung aufzunehmen und im angeschlossenen Zustand an der Wandfläche zu umschließen. Ferner können mehrere Erweiterungsmodule schalenartig um das Basismodul an der Wandfläche angeordnet werden und das modulare Aufputz-System radial nach außen hin erweitern wobei dadurch eine hohe Stabilität des modularen Aufputz-System erreicht werden kann.

Fig. 1 zeigt eine schematische Ansicht eines Modularen Aufputz-Systems 100 mit dem Basismodul 20 und einem Erweiterungsmodul 50. Das Basismodul 20 ist an einer Wandfläche 10 angeordnet und weist eine Stromversorgungseinheit 27 auf, über die das Basismodul 20 mit Strom versorgt wird. Ferner ist an dem Basismodul 20 eine Basismodulschnittstelle 25 vorgesehen, die mit einer Erweiterungs-Schnittstelle 55 des Erweiterungsmoduls 50 verbunden ist. Das Erweiterungsmodul 50 ist über die Verbindung seiner Erweiterungsmodul-Schnittstelle 55 mit der Basis-Modulschnittstelle 25 an dem Basismodul 20 befestigt. Ferner weist das Erweiterungsmodul 50 eine Nutzerfunktionseinheit 80 auf, die über das Basismodul 20 mittels der der Verbindung zwischen der Basis-Modulschnittstelle 25 und der Erweiterungsmodul-Schnittstelle 55 mit elektrischer Energie versorgt werden kann.

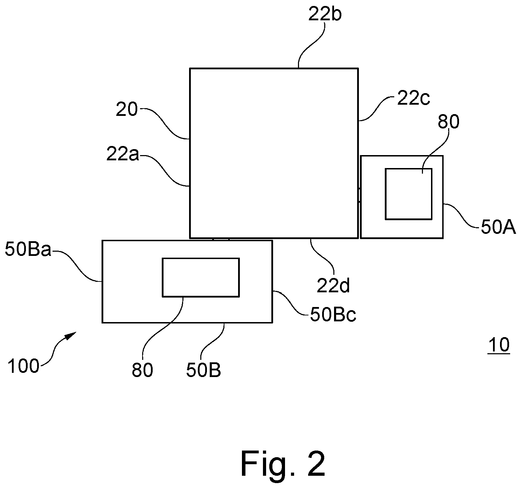

Fig. 2 zeigt eine schematische Ansicht einer weiteren Ausführungsform des modularen Aufputz-Systems 100 mit zwei Erweiterungsmodulen 50 unterschiedlicher Größe. Fig. 2 zeigt das modularen Aufputz-Systems 100 in der Frontansicht, also aus einer Frontalperspektive. Das Basismodul 20 weist eine quadratische Form mit jeweils vier im Wesentlichen gleich langen Außenkanten 22a, 22b, 22c, und 22d auf. Das Basismodul 20 ist an der Wandfläche 10 angeordnet, wobei jeweils die obere Außenkante 22b und die untere Außenkante 22d jeweils parallel zueinander verlaufen. An der unteren Außenkante 22d des Basismodul 20 ist ein Medium-Erweiterungsmodul 50b angeordnet. Das Medium-Erweiterungsmodul 50b kann als Erweiterungsmodul mit der Größe "Medium" verstanden werden. Das Medium-Erweiterungsmodul 50b weist eine rechteckige Form auf, wobei das Medium-Erweiterungsmodul halb so groß ist wie das Basismodul. In anderen Worten, die Länge der Außenkanten 50Ba und 50Bc ist halb so lang wie die Länge der Außenkanten des Basismoduls 20. Ferner ist am dem Basismodul 20 ein Mini-Erweiterungsmodul 50A angeordnet. Das Mini-Erweiterungsmodul 50A kann als Erweiterungsmodul mit der Größe "Mini" verstanden werden. Das Mini-Erweiterungsmodul 50A hat eine quadratische Form und ist halb so groß wie das Medium-Erweiterungsmodul 50B, bzw. hat das Mini-Erweiterungsmodul 50A ein Viertel der Größe des Basismoduls 20. Das Mini-Erweiterungsmodul 50A und das Medium-Erweiterungsmodul 50B weisen jeweils eine Nutzerfunktionseinheit 80 auf.

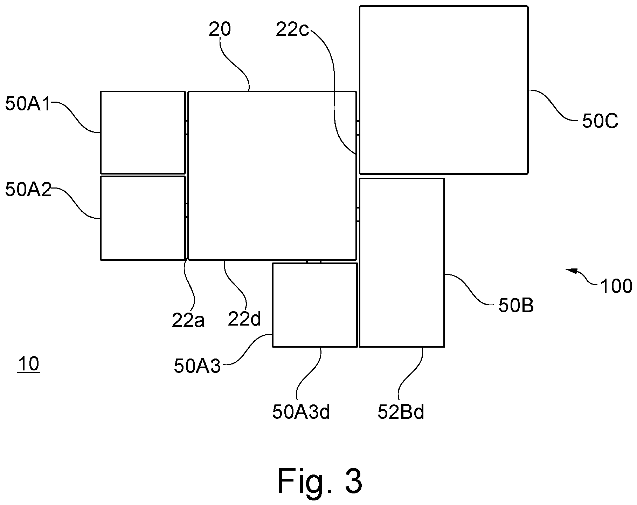

Fig. 3 zeigt eine schematische Frontansicht einer weiteren Ausführungsform des modularen Aufputz-System 100 mit fünf Erweiterungsmodulen. Die Erweiterungsmodule weisen wie schon unter Fig. 2 beschrieben verschiedenen Modulgrößen auf. An dem Basismodul 20 sind entlang der seitlichen Außenkante 22a des Basismoduls 20 zwei Mini-Erweiterungsmodule 50A1 und 50A2 angeordnet. Die kombinierte Seitenlänge der beiden Mini-Erweiterungsmodule 50A1 und 50A2 entspricht dabei im Wesentlichen der Länge der seitlichen Außenkante 22a des Basismoduls 20. Ferner ist eine weiteres Mini-Erweiterungsmodul 50A3 an der unteren Außenkante 22d des Basismoduls 20 angeordnet. An der linken seitlichen Außenkante 22c ist an ihrem unteren Abschnitt ein Medium-Erweiterungsmodul 50B angeordnet, wobei die untere Außenkante des Medium-Erweiterungsmodul 52Bd bündig mit der unteren Außenkante des Mini-Erweiterungsmoduls 52A3d abschließt. Ein weiteres quadratischen Standart-Erweiterungsmodul 50C ist an dem oberen Abschnitt der rechten seitlichen Außenkante des Basismoduls 22c angeordnet, wobei das Standart-Erweiterungsmodul 50C im Wesentlichen gleich groß ist wie das Basismodul 20. Die Nutzerfunktionseinheiten der Erweiterungsmodule der Größe Mini, Medium und Standard sowie die jeweiligen Schnittstellen der Erweiterungsmodule sind in Fig. 3 nicht angezeigt.

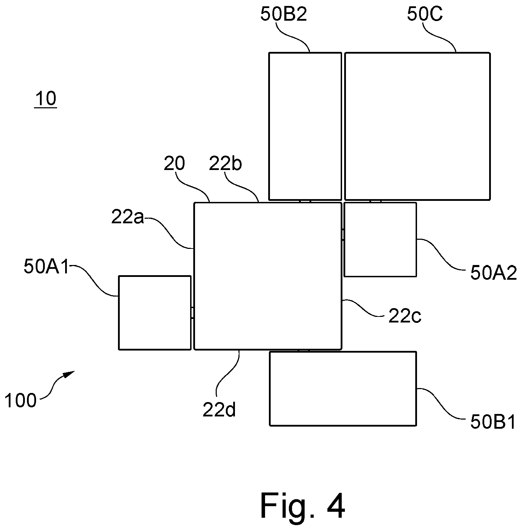

Fig. 4 zeigt eine schematische Frontansicht einer weiteren Ausführungsform des modularen Aufputz-Systems 100 mit fünf Erweiterungsmodulen unterschiedlicher Größe. Ähnlich wie in der Ausführungsform, die in Fig. 3 gezeigt ist, sind die zwei Mini-Erweiterungsmodule 50A1 und 50A2 an den seitlichen Außenkanten des Basismoduls 22c bzw. 22c angeordnet. Ferner sind an der oberen Außenkante des Basismoduls 22b ein Medium-Erweiterungsmodul 50B2 und an der unteren Außenkante 22d ein Medium-Erweiterungsmodul 50B1 angeordnet. Ein weiteres Standard-Erweiterungsmodul 50C ist an den jeweiligen Außenkanten des Medium-Erweiterungsmoduls 50B2 und des Mini-Erweiterungsmodul 50A2 angeordnet. Das Standard-Erweiterungsmodul 50C ist dabei über seine Erweiterungsmodulschnittstellen (nicht gezeigt) mit dem Medium-Erweiterungsmodul 50B2 und/oder mit dem Mini-Erweiterungsmodul 50A2 verbunden und kann darüber mit Strom versorgt werden. Die jeweiligen seitlichen Außenkanten der Erweiterungsmodule sind zueinander jeweils parallel ausgerichtet. Die Nutzerfunktionseinheiten der Erweiterungsmodule der Größe Mini, Medium und Standard sowie die jeweiligen Schnittstellen der Erweiterungsmodule sind in auch Fig. 4 nicht angezeigt.

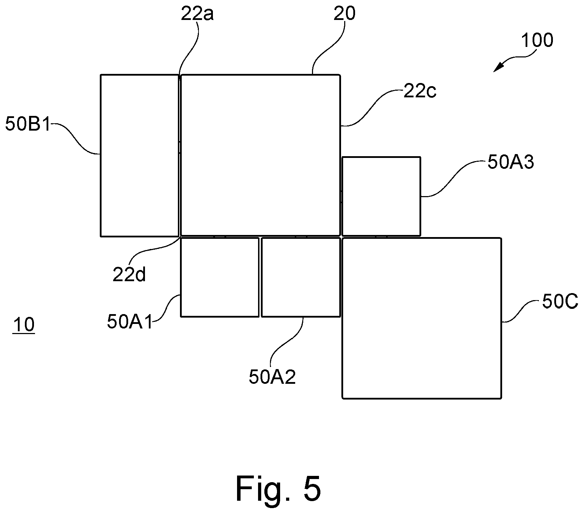

Fig. 5 zeigt eine schematische Frontansicht einer weiteren Ausführungsform des modularen Aufputz-Systems 100 mit fünf Erweiterungsmodulen unterschiedlicher Größe. Ähnlich wie in den Ausführungsformen, die in Fig. 3 und Fig. 4 gezeigt sind, ist ein Medium-Erweiterungsmodul 50B1 an der seitlichen Außenkante des Basismoduls 22a angeordnet und zwei Mini-Erweiterungsmodule 50A1 und 50A2 sind an der unteren Außenkante 22d des Basismoduls 20 angeordnet. Ein weiteres Mini-Erweiterungsmodulmodul 50A3 ist an dem unteren Abschnitt der seitlichen Außenkante des Basismoduls 22c angeordnet. Ein weiteres Standard-Erweiterungsmodul 50C ist an den jeweiligen Außenkanten des Mini-Erweiterungsmoduls 50A2 und des Mini-Erweiterungsmodul 50A3 angeordnet. Die Nutzerfunktionseinheiten der Erweiterungsmodule der Größe Mini, Medium und Standard sowie die jeweiligen Schnittstellen der Erweiterungsmodule sind in auch Fig. 5 nicht angezeigt

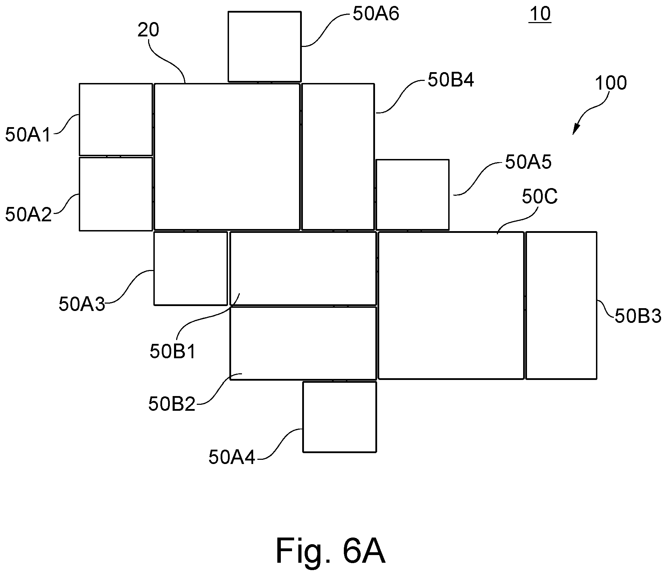

Fig. 6A zeigt eine weitere Ausführungsform des modularen Aufputz-Systems 100 mit einer Vielzahl von Erweiterungsmodulen unterschiedlicher Größe, das an einer Wandfläche angeordnet. An dem Basismodul 20 sind vier Mini-Erweiterungsmodule 50A1, 50A2, 50A3, und 50A6 und zwei Medium-Erweiterungsmodule 50B 1 und 50B4 angeordnet. Ferner ist an dem Medium-Erweiterungsmodul 50B 1 ein weiteres Medium-Erweiterungsmodul 50B2 an welches wiederum ein Mini-Erweiterungsmodul 50A4 angeschlossen ist. Ferner ist ein Standart-Erweiterungsmodul 50C mit den Medium-Erweiterungsmodulen 50B1 und 50B2 verbunden, wobei an dem Standart-Erweiterungsmodul 50C ein weiteres Medium-Erweiterungsmodul 50B3 und ein weiteres Mini-Erweiterungsmodul 50A5 angeordnet sind. Die Erweiterungsmodule werden über ihre jeweiligen Erweiterungsschnittstellen (nicht gezeigt) an dem Basismodul gehalten, können aber auch noch zusätzlich an der Wandfläche 10 befestigt sein. Das erfindungsgemäße Aufputz-System 10 ermöglich somit einen Zusammenschluss einer Vielzahl von Erweiterungsmodulen unterschiedlicher Größe, die alle über ihre jeweiligen Erweiterungsmodul-Schnittstellen mit dem Basismodul mit elektrisch verbindbar sind.

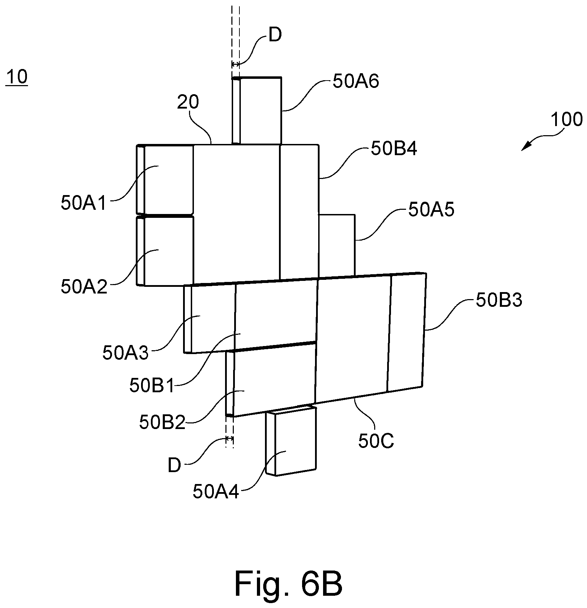

Fig. 6B zeigt die gleiche Ausführungsform des modularen Aufputz-Systems wie in Fig. 6A nur aus einer seitlichen Perspektive. Die Erweiterungsmodule weisen im Wesentlichen alle die gleiche Höhe, bzw. Dicke D auf wie das Basismodul 20. Damit kann das Aufputz-System 100 als eine gleichmäßige Funktionsfläche erscheinen, auf der die Nutzerfunktionseinheiten (nicht dargestellt) gut sichtbar und zugänglich für den Nutzer auf einer Ebene an der Wandfläche 10 angeordnet sind. Dieser Effekt kann noch verstärkt werden, wenn die jeweiligen Außenkanten der Erweiterungsmodule eng-anliegend and den jeweiligen anderen Außenkanten der Erweiterungsmodule, bzw. dem Basismodul angeordnet sind.

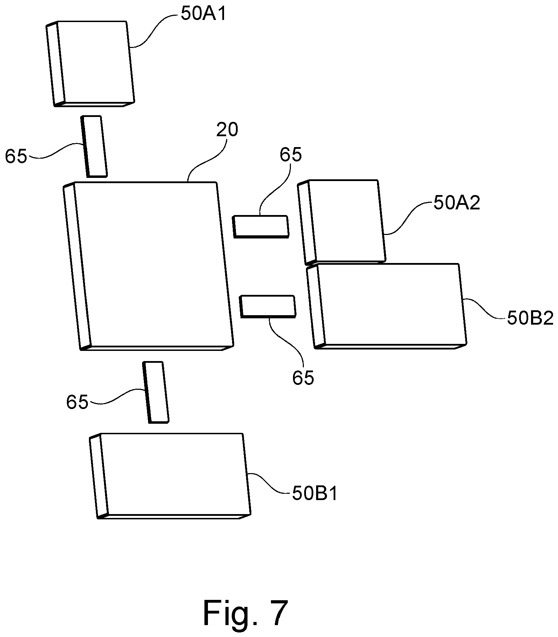

Fig. 7 zeigt eine weitere Ausführungsform des modularen Aufputz-Systems 100 in einer schematischen Explosionsansicht. Die Mini-Erweiterungsmodule 50A1, 50A2 und 50A3 und das Medium-Erweiterungsmodul 50B2 sind jeweils über Steckmittel 65 miteinander an dem Basismodul 20 anschließbar. Das heißt, dass die Erweiterungs-Modulschnittstellen der Erweiterungsmodule über die Steckmittel 65 an den Basis-Modulschnittstellen anschließbar sind. Ferner können auch die Erweiterungs-Modulschnittstellen z.B. der Erweiterungsmodule 50A2 und 50B2, über die Steckmittel 65 miteinander anschließbar sein. In der Ausführungsform die in Fig. 7 gezeigt ist, sind die Steckmittel an der Rückseite der Erweiterungsmodule anordbar, also sind im angeschlossenen Zustand an der Wandfläche 10 anliegend.

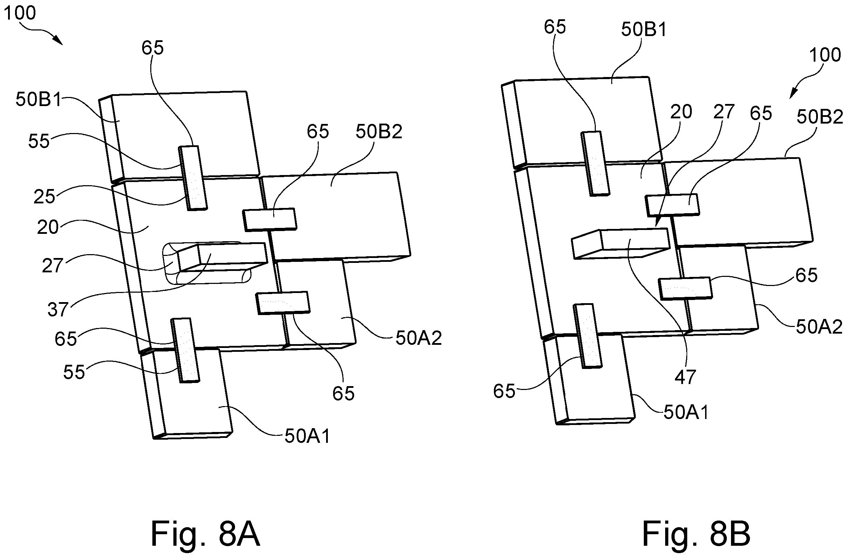

Fig. 8A zeigt eine schematische Rückansicht einer weiteren Ausführungsform des modularen Aufputz-Systems 100. Die Medium-Erweiterungsmodule 50B1 und 50B2 und die Mini-Erweiterungsmodule 50A1 und 50A2 sind über Steckmittel 65 an dem Basismodul 20 angeschlossen. Genauer gesagt sind die jeweiligen Erweiterungsmodul-Schnittstellen 55 der Erweiterungsmodule über die Steckmittel 65 an den Basis-Modulschnittstellen 25 des Basismodul 20 angeschlossen. Das Basismodul 27 weist dabei eine integrierte Stromversorgungseinheit 27 auf, die einen Unterputzeinsatz 37 umfasst. Der Unterputzeinsatz 37 ist dazu ausgebildet in eine Unterputzdose (nicht gezeigt) eingebracht zu werden und darin an eine Stromversorgung angeschlossen zu werden.

Fig. 8B zeigt eine schematische Rückansicht einer weiteren Ausführungsform des modularen Aufputz-Systems 100. Der Aufbau der in Fig. 8B gezeigten Ausführungsform entspricht dem Aufbau, der Ausführungsform die in Fig. 8A beschrieben wurde, mit dem Unterschied, dass das die Stromversorgungseinheit 27 des Basismodul 20 unterschiedlich ausgebildet ist. Stromversorgungseinheit 27 weist hierfür eine Stromversorgungsschnittstelle 47 auf, z.B. einen USB-C Anschluss, über die das Basismodul 20 mit Strom versorgt werden kann.

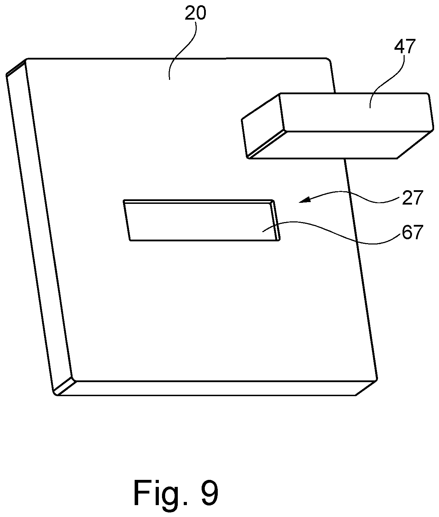

Fig. 9 zeigt eine schematische Rückansicht einer weiteren Ausführungsform eines Basismoduls 20 des modularen Aufputz-Systems 100. Das Basismoduls 20 weist eine Stromversorgungseinheit 27 auf, die eine Stromversorgungsschnittstelle 47 umfasst. Die Stromversorgungsschnittstelle 47 kann z.B. als USB-C Anschluss ausgebildet sein. Die Stromversorgungsschnittstelle 47 ist hierfür in eine dazu vorgesehene Verbindungstelle 67 des Basismoduls 20 eingebracht, bzw. eingesteckt.

### Bezugszeichenliste:

Modulares Aufputz-System 100
Wandfläche 10
Basismodul 20
Seitliche Außenkante des Basismodul 22a
Seitliche Außenkante des Basismodul 22c
Obere Außenkante des Basismodul 22b
Untere Außenkante des Basismoduls 22d
Basis-Modulschnittstelle 25
Stromversorgungseinheit 27
Unterputzeinsatz 37
Stromversorgungsschnittstelle 47
Erweiterungsmodul 50
Mini-Erweiterungsmodul 50A
Medium-Erweiterungsmodul 50B
Standart-Erweiterungsmodul 50C
Außenkante des Mini-Erweiterungsmodul 52Aa-d
Außenkante des Medium-Erweiterungsmodul 52Ba-d
Erweiterungsmodul-Schnittstelle 55
Steckmittel 65
Verbindungstelle 67
Nutzerfunktionseinheit 80

## Patentansprüche

1. Modulares Aufputz-System (100), umfassend:
- ein Basismodul (20) zum Anbringen an einer Wandfläche (10), wobei das Basismodul (20) eine Stromversorgungseinheit (27) und mindestens eine Basis-Modulschnittstelle (25) aufweist;
- mindestens ein Erweiterungsmodul (50), wobei das Erweiterungsmodul (50) mindestens eine Erweiterungs-Modulschnittstelle (55) und eine Nutzerfunktionseinheit (80) aufweist;
wobei das Erweiterungsmodul (50) über die Erweiterungs-Modulschnittstelle (55) an der Basis-Modulschnittstelle (25) des Basismoduls (20) zur Befestigung des Erweiterungsmoduls (50) an dem Basismodul (20) und zum Ausbilden einer elektrischen Verbindung zwischen dem Basismodul (20) und dem Erweiterungsmodul (50) anschließbar ist; und
wobei das Erweiterungsmodul (50) im angeschlossenen Zustand an der Wandfläche (10) an dem Basismodul (20) anliegend angeordnet ist, und die Nutzerfunktionseinheit (80) des Erweiterungsmoduls mit dem Basismodul (20) elektrisch verbunden ist.

2. Modulares Aufputz-System (100) nach Anspruch 1, wobei das Erweiterungsmodul (50) jeweils an ein weiteres Erweiterungsmodul (50) über ihre jeweiligen Erweiterungs-Modulschnittstellen (55) zur Befestigung des Erweiterungsmoduls (50) an dem weiteren Erweiterungsmodul (50) und zum Ausbilden einer elektrischen Verbindung zwischen den Erweiterungsmodulen (50) aneinander anschließbar ist, und wobei im angeschlossenen Zustand das Erweiterungsmodul (50) auf der Wandfläche (10) an dem weiteren Erweiterungsmodul (50) anliegend angeordnet ist, und die Nutzerfunktionseinheiten (80) der Erweiterungsmodule (50) mit dem Basismodul (20) elektrisch verbunden sind.

3. Modulares Aufputz-System (100) nach einem der Ansprüche 1 oder 2, wobei das Basismodul (20) eine Nutzerfunktionseinheit (80) aufweist.

4. Modulares Aufputz-System (100) nach einem der Ansprüche 1-3, wobei die Erweiterungs-Modulschnittstellen (55) Einrastelemente und/oder Magnetelemente aufweisen.

5. Modulares Aufputz-System (100) nach einem der Ansprüche 1-4, wobei das mindestens eine Erweiterungsmodul (50) an der Wandfläche befestigbar ist.

6. Modulares Aufputz-System (100) nach einem der Ansprüche 1-5, wobei das Basismodul (20) an einer Unterdose an der Wandfläche montierbar ist, und die Stromversorgungseinheit (27) mit der Unterdose elektrisch verbindbar ist.

7. Modulares Aufputz-System (100) nach einem der Ansprüche 1-5, wobei die Stromversorgungseinheit (27) über ein Stromkabel elektrisch verbindbar ist.

8. Modulares Aufputz-System (100) nach einem der Ansprüche 1-7, wobei das Basismodul (20) und das mindestens eine Erweiterungsmodul (50) jeweils eine Außenkante aufweist, die gerade verläuft.

9. Modulares Aufputz-System (100) nach Anspruch 8, wobei das mindestens eine Erweiterungsmodul (50) rechteckförmig ausgebildet ist.

10. Modulares Aufputz-System (100) nach Anspruch 8 oder 9, wobei die Außenkante des mindestens einen Erweiterungsmoduls (50) im angeschlossenen Zustand an der Wandfläche (10) im Wesentlichen parallel zu der Außenkante des Basismoduls (20) ausgerichtet ist.

11. Modulares Aufputz-System (100) nach einem der Ansprüche 1 bis 10, wobei ein Abdeckrahmen vorgesehen ist, der konfiguriert ist, das Basismodul (20) und das mindestens eine Erweiterungsmodul (50) im angeschlossenen Zustand an der Wandfläche (10) zu umschließen.

12. Modulares Aufputz-System (100) nach einem der Ansprüche 1 bis 6, wobei ein Erweiterungsmodul (50) des mindestens einen Erweiterungsmoduls (50) eine Ausnehmung aufweist, die konfiguriert ist, das Basismodul (20) aufzunehmen und im angeschlossenen Zustand an der Wandfläche (10) zu umschließen.

13. Basismodul (20) zur Verwendung in einem modularen Aufputz-System (100) nach einem der Ansprüche 1-12, umfassend eine Stromversorgungseinheit (27) und mindestens eine Basis-Modulschnittstelle (25).

14. Erweiterungsmodul (50) zur Verwendung in einem modularen Aufputz-System nach einem der Ansprüche 1-12 umfassend:
eine Erweiterungs-Modulschnittstelle (55), die an einer Basis-Modulschnittstelle (25) eines Basismoduls (20) zur Befestigung des Erweiterungsmoduls (50) an dem Basismodul (20) und zum Ausbilden einer elektrischen Verbindung zwischen dem Basismodul (20) und dem Erweiterungsmodul (50) anschließbar ist.

15. Verfahren zum Installieren eines modularen Aufputz-System nach einem der Ansprüche 1-12, umfassend:
- Anbringen des Basismodul (20) an einer Wandfläche (10);
- Befestigen des Erweiterungsmodul (50) über die mindestens eine Erweiterungs-Modulschnittstelle (55) an der Basis-Modulschnittstelle (25) des Basismoduls (20);
- Elektrisches Verbinden der Nutzerfunktionseinheit (80) des mindestens einen Erweiterungsmoduls (50) mit dem Basismodul (20); und
- Versorgen der Nutzerfunktionseinheit (80) mit Strom über die Stromversorgungseinheit (27) des Basismoduls (27).
